# EUROPEAN PATENT SPECIFICATION

(11) **EP 1 250 542 B1**
(45) Date of publication and mention of the grant of the patent: **22.09.2004**
(21) Application number: 01900846.5
(22) Date of filing: 03.01.2001
(51) Int. Cl.: F16H 7/12

(54) **TENSIONER COMPRISING A DAMPING MECHANISM**
RIEMENSPANNER MIT DÄMPFERMECHANISMUS
TENDEUR A AMORTISSEUR

(30) Priority: 12.01.2000 US 482128
(43) Date of publication of application: 23.10.2002
(73) Proprietor: THE GATES CORPORATION, Denver, Colorado 80209 (US)
(72) Inventor: SERKH, Alexander, Troy, MI 48098-4696 (US)
(74) Representative: James, Anthony Christopher W.P.
(86) International application number: PCT/US2001/000175
(87) International publication number: WO 2001/051828

(56) References cited:
- DE-A- 19 623 485
- DE-U- 9 209 454
- US-A- 5 632 697

## Description

The invention relates to a tensioner comprising a damping mechanism. More particulary, the invention relates to a tensioner with a spring that biases the position of a pivot-arm to which a belt engaging pulley is rotatably mounted. The tensioner of the invention with its damping mechanism is particularly useful in controlling tension of a micro-V belt drive system such as a front end accessory drive for automotive engine applications.

A mechanical tensioner is used to automatically control tension of a micro-V belt of a front end accessory drive for automotive engine applications. Usually, such a tensioner has a pivot-arm that rotates about a pivot secured to a base and uses a sleeve type bushing on the pivot to provide a bearing surface for the rotating pivot-arm. Many of such bearings are made of plastic and are subject to wear over the expected life of the tensioner. A torsion spring is often used with one end connected to the base and another end connected to the pivot-arm to bias the position of the pivot-arm and position an attached pulley against a belt. The spring is also used to generate a spring force operative with a damping mechanism that generates a normal force component to a friction sliding surface to inhibit or dampen oscillatory movements of the pivot-arm.

A common tensioner design solving bulk, cost and damping problems is disclosed in U.S. Pat. No. 4,473,362. The '362 tensioner has a pivot-arm attached to an off-set cylindrical member that supports the pivot-arm and rotates about a pivot secured to a base. Only one torsion spring is used with one end connected to the pivot-arm and the other end connected to the base. A single sleeve-type bushing on the pivot has a bearing surface that supports the cylindrical member. The radial plane of a pulley bearing is off-set in relation to the sleeve-type bushing which introduces a moment or couple as a load which must be carried by the bushing. Such tensioners are referred to as "Zed" type tensioners because of the off-set of the pulley relative to its support.

The belt of a drive system utilizing such Zed type tensioners engages the pulley and generates a belt force at the pulley which is transmitted to the cylindrical member. As explained in the '362 patent, the unequal loads to the bushing are reduced by. a damping means that generates a normal force component acting in generally the same direction as the belt force component. In some cases, the normal force component of the damping means is not sufficient to balance against a moment generated by the belt force being off-set, as such the single bushing has a tendency to wear unevenly and prematurely.

A damping mechanism typically used in such "Zed" type tensioners is disclosed in U.S. Pat. No. 5,632,697. Its features form the basis for the preamble of claim 1 appended hereto. The 697 damping mechanism induces a damping means where the normal force generated by the damping means is greater than the spring force component activating the damping mechanism. The damping means has a brake shoe with an outer arcuate friction surface that engages the inside of a second cylindrical member to provide friction surface sliding therewith. The brake shoe has two oppositely facing inside ramp surfaces where one of the ramp surfaces slideably engages a complimentary ramp surface of the base and the other ramp surface slideably engages an extension of the spring end which applies the spring force to the brake shoe. The spring force is generated by an end of the spring bending around a proturbance formed in the base. The spring under torsion applies a spring force substantially normal to the inside ramp surface pressing ramp surface of the shoe against the complimentary ramp surface of the base and pressing a lining against a the compliementary inside surface of the second cylindrical member thereby causing a reactionary force to be imparted to the shoe.

Since the '697 damping mechanism requires the use of multiple ramp surfaces, the brake shoe and a proturbance in the base the ability to achieve greater damping is limited. In addition, the use of multiple parts increases the cost, weight and size of the overall tensioner design.

### SUMMARY OF THE INVENTION

In accordance with the invention, as defined in claim 1, a tensioner for tensioning a power transmisson belt, comprising a damping mechanism is provided that is particularly useful in micro-V belt front end accessory drive systems utilizing a tensioner in automotive applications where the pulley alignment over the expected life of the tensioner is important and the overall cost, weight and size of the tensioner is important. The damping mechanism of the invention includes a spring having first and second ends with the first end operatively connected to a damping plate having first and second spring contact points whereby the spring torque applied to the damping plate in combination with a reactive force at the pivot surface generates a normal force. The damping plate also includes an outer friction surface and at least one ramp surface. in one embodiment of the invention the second end of the spring is connected to a tensioner base. In another embodiment of the invention the second end of the spring is connected to a tensioner pivot-arm.

An advantage of the invention is that a reduced bulk damping mechanism is provided having a reduced number of component parts and an increased area of friction contact. Another advantage of the invention is provided by reducing the need for expensive machined proturbances and ramp surfaces in either the base or the pivot-arm.

These and other advantages of the invention will be apparent after reviewing the drawings and description thereof wherein;
FIG. 1 is a front view schematic of a front end accessory drive system that includes a belt tensioner having a damping mechanism of the invention;
FIG. 2 is an enlarged partial schematic view taken generally at line 2-2 of FIG. 1 illustrating various component forces associated with the tensioner;
FIG. 3 is a cross-sectional view taken along the line 3-3 of FIG 2;
FIG. 4 is an enlarged view showing the damping mechanism of the invention;
FIG. 5 is an alternative embodiment of the damping mechanism having a semi-circular shape;
FIG. 6 is an alternative embodiment of the damping mechanism having a semi-circular shape and an outer wall having a deflecting band; and
FIG. 7 is an alternative embodiment of the damping mechanism having an inner friction surface.

### DESCRIPTION OF THE PREFERRED EMBODIMENTS

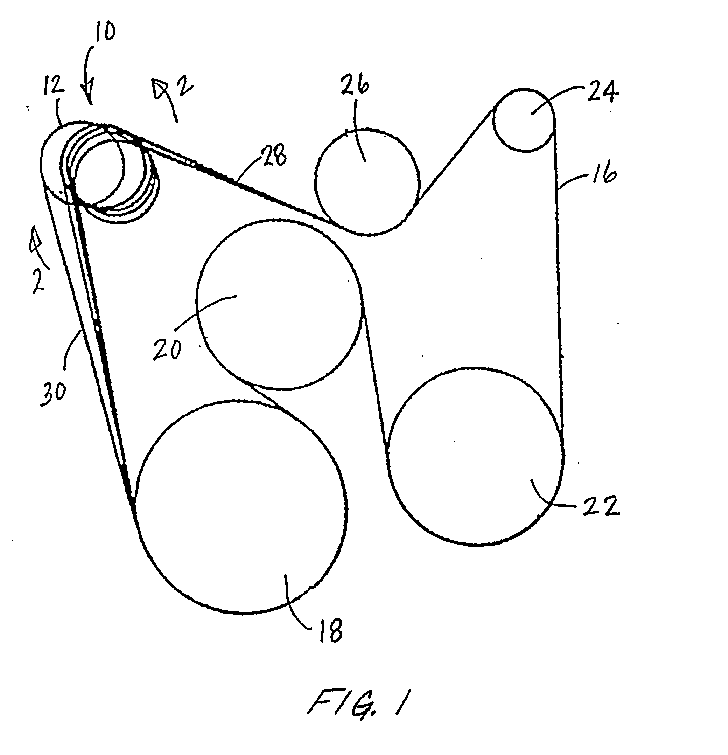

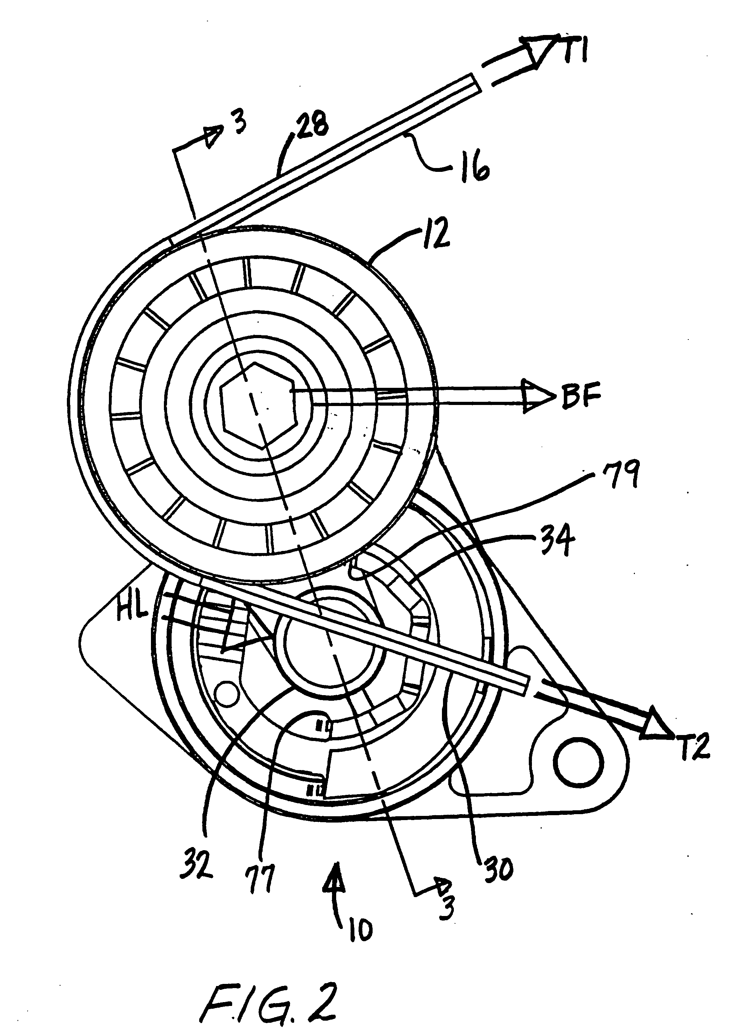

Referring to FIGS. 1 and 2, a tensioner 10 with a pulley 12 is illustrated as a component part of a belt drive system that includes a belt 16 and several pulleys. By way of example, the belt 16 is entrained around a crank pulley 18, a fan/water pump pulley 20, a power steering pulley 22, an alternator pulley 24, an idler pulley 26, and the tensioner pulley 12. The tensioner pulley 12 engages the belt 16 and is shown in several positions to schematically show how the pulley moves to adjust belt tension. The tensioner pulley 12 engages the belt 16 and receives a belt load in the form of belt tension T1, T2, of adjacent belt spans 28, 30. The belt tension T1, T2 (or load) combine to generate a belt force component BF along a bisector or an angle formed between the belt spans 28, 30. The belt force component being axially off-set from a pivot 32 of the tensioner, generates a complicated hub load including forces and moments that are symbolically (i.e. not specifically) represented by the arrow HL. The damping mechanism of the invention is shown at 34 in the tensioner 10.

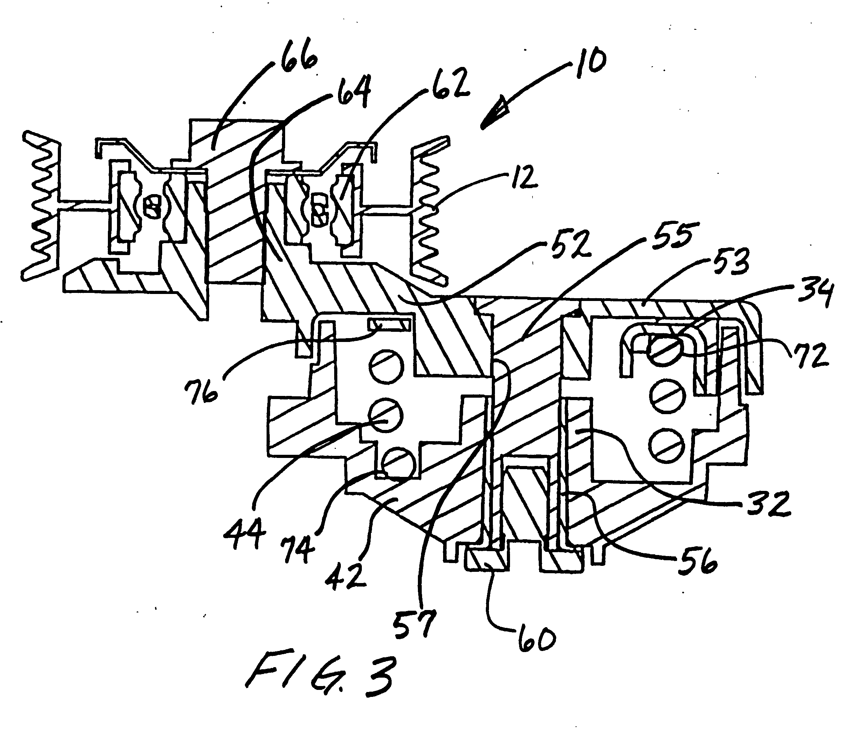

Referring the FIG 3, the tensioner 10 is of the mechanical type including the damping mechanism 34 of the invention includes a base 42, a torsion spring 44 and a pulley 12 rotatably mounted to a pivot-arm 52 such as by means of a ball bearing 62 on a shaft 64. The ball bearing 62 is retained on the shaft 64 by a flanged fastener 66. The pivot-arm 52 is attached to a cylindrical member 53 that supports the pivot-arm 52 and rotates with a pivot shaft 55. At least one sleeve type bushing 56 is positioned in the pivot 32. The pivot bushing 56 is preferably of the polymeric type and positioned in the pivot for rotating against the pivot shaft 55 to thereby support the pivot-arm 52. While one pivot bushing 56 is represented, it is possible to have more than one pivot bushing. The pivot shaft 55 including a fastener 60, extends through a flanged bore 57 in the cylindrical member 53 and the pivot bushing 56 to thereby attach the pivot-arm 52 to the base 42.

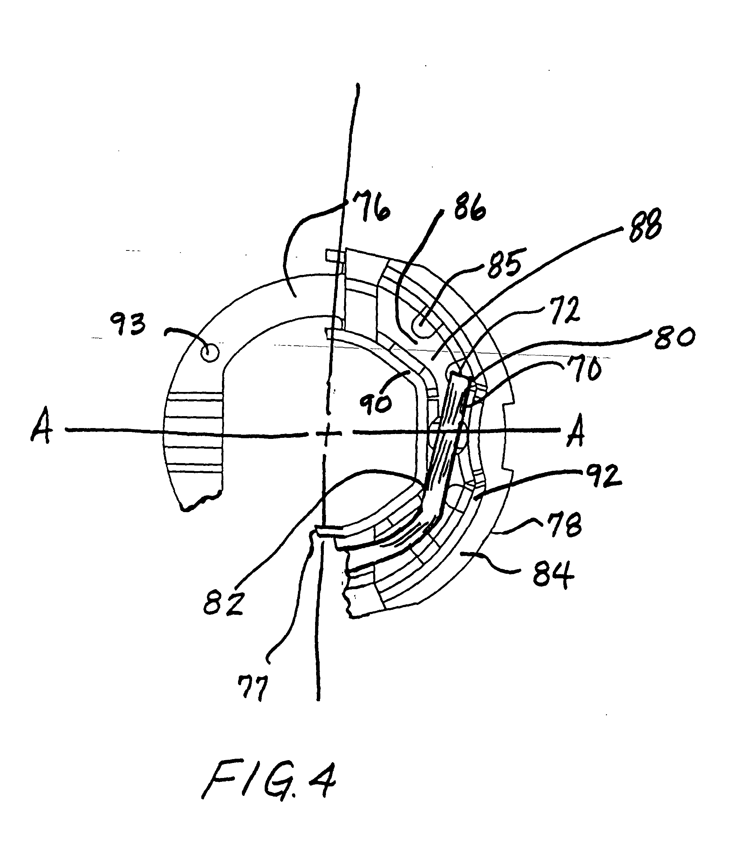

Referring to FIGS. 2-4 the damping mechanism 34 includes a torsion spring 70 having first 72 and second 74 ends. The damping mechanism 34 further includes a damping plate 76 having an outer friction surface 78 for engagement in this embodiment with the base 42 of the tensioner 10. A ramp surface 77 is provided for mating engagement with a proturbance 79 of the pivot-arm 52. The damping plate 76 includes first 80 and second 82 spring contact points for operatively connecting the spring 70 to the damping plate 76. In the embodiment shown in FIG. 4, the damping plate 76 is symmetrical about the A-A axis thereby allowing installation of the spring 70 having a different spring coil wind direction.

The damping plate includes a channel 86 for receiving the spring 70 having a plate base 88, an inner wall 90 and an outer wall 92. The plate base includes friction pads 93 periodically spaced on a bottom surface (not shown) for sliding engagement with the tensioner cylindrical member 53.

The damping plate 76 includes an attached lining 84 that defines the friction surface 78 and is attached to the damping plate 76 by the use of mechanical tabs 85 for fixedly adhering the lining 84 thereto.

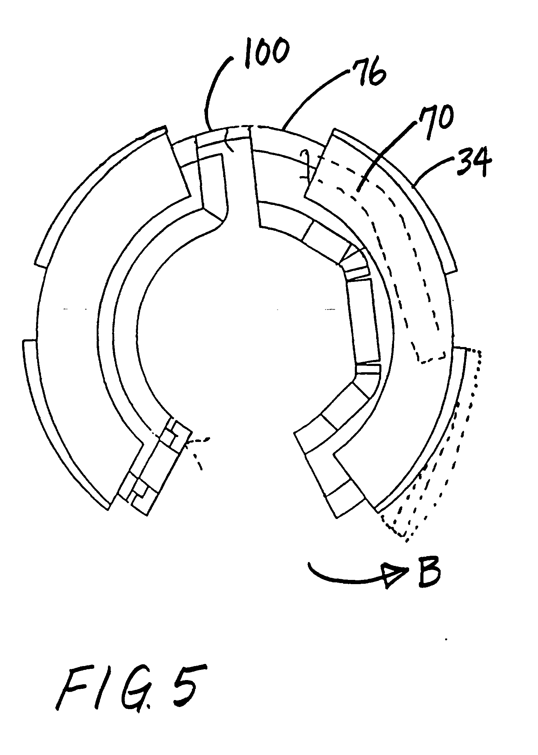

The damping mechanism 34 as shown in FIGS. 2-4 is shaped circular. Another embodiment of the damping mechanism 34 is shown in FIG. 5 where the damping plate is semi-circular. The damping plate 76 includes a pivot joint 100 allowing the damping plate 76 under torque from the spring 70 to have relative motion indicated by B. The additional movement of the damping plate 76 provides increased friction force for damping.

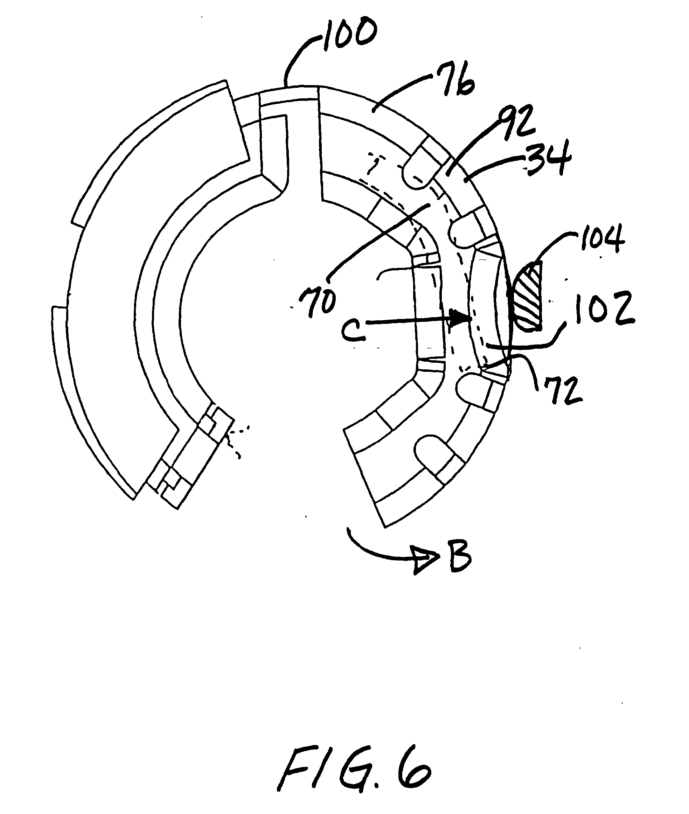

In another embodiment shown in FIG 6, a semi-circular damping plate 76 is provided including a deflecting band 102 on the outer wall 92. In this embodiment, the force applied by spring end 72 acts upon the deflecting band 102 as shown in C, for allowing radial engagement with the tensioner in order to assist in loading the pivot-arm 52. In this embodiment, the deflecting band 102 has contact with additional support 104 attached to the tensioner arm 52.

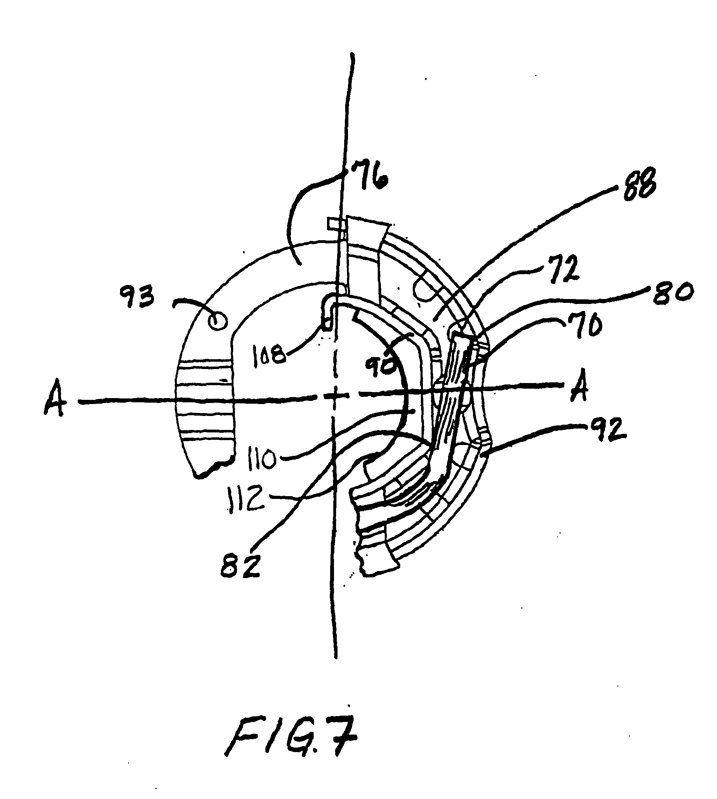

Figure 7 shows another embodiment of the damping mechanism including the inner wall 90 having a lining 110 including an inner friction surface 112.

## Claims

1. A tensioner (10) for tensioning a power transmission belt (16), comprising a damping mechanism (34) which comprises:
a spring (70) having first (72) and second (74) ends, the spring (70) being capable of exerting a spring torque;
a damping plate (76) having a friction surface (78) and at least one ramp surface (77);
**characterised in that**:
the ramp surface (77) engages a pivot surface (79); and
the damping plate (76) includes first (80) and second (82) spring contact points for operatively connecting the first end (72) of the spring (70) whereby the spring torque applied to the damping plate (76) in combination with a reactive force at the pivot surface (79) generates a normal force.

2. The tensioner (10) as claimed in claim 1 wherein the damping plate (76) is symmetrical about at least one axis.

3. The tensioner (10) as claimed in claim 1 wherein the damping plate (76) includes an outer friction surface (78).

4. The tensioner (10) as claimed in claim 1 wherein the damping plate (76) includes an attached lining (84) that defines the outer friction surface (78).

5. The tensioner (10) as claimed in claim 1 wherein the spring (70) is a torsion spring.

6. The tensioner (10) as claimed in claim 1 wherein the damping plate (76) is circular.

7. The tensioner (10) as claimed in claim 1 wherein the damping plate (76) is semi-circular.

8. The tensioner (10) as claimed in claim 1 wherein the damping plate (76) includes an inner friction surface.

9. The tensioner (10) as claimed in claim 8 wherein the damping plate (76) includes an attached lining (84) that defines the inner friction surface (78).

10. The tensioner (10) as claimed in claim 1 wherein the damping plate (76) includes a channel (86) having a plate base (88), an inner wall (90) and an outer wall (92).

11. The tensioner (10) as claimed in claim 10 wherein the plate base (88) includes a bottom surface for sliding engagement with the tensioner (10).

12. The tensioner (10) as claimed in claim 11 wherein the bottom surface includes friction pads (93).

13. The tensioner (10) as claimed in claim 10 wherein the plate base (88) includes a top surface for engagement with the spring (70).

14. The tensioner (10) as claimed in claim 7 wherein the damping plate (76) includes a pivot joint (100) for allowing relative motion of the damping plate (76).

15. The tensioner (10) as claimed in claim 14 wherein the damping plate (76) includes a channel (86) having a plate base (88), an inner wall (90) and an outer wall (92).

16. The tensioner (10) as claimed in claim 15 wherein the outer wall (92) includes a deflecting band (102) for allowing radial engagement with the tensioner (10).

## Patentansprüche

1. Spannvorrichtung (10) zum Spannen eines Kraftübertragungsriemens (16), mit einem Dämpfungsmechanismus (34), der umfaßt:
eine Feder (70) mit einem ersten (72) und einem zweiten Ende (74), wobei die Feder (70) in der Lage ist, ein Federdrehmoment auszuüben;
eine Dämpfungsplatte (76) mit einer Reibfläche (78) und wenigstens einer Rampenfläche (77);
**dadurch gekennzeichnet, daß**
die Rampenfläche (77) an einer Schwenkfläche (79) angreift; und
die Dämpfungsplatte (76) einen ersten (80) und einen zweiten (82) Federkontaktpunkt zum wirkungsmäßigen Verbinden des ersten Endes (72) der Feder (70) aufweist, wodurch das auf die Dämpfungsplatte (76) aufgebrachte Federdrehmoment in Kombination mit einer Reaktionskraft an der Schwenkfläche (79) eine Normalkraft erzeugt.

2. Spannvorrichtung (10) nach Anspruch 1, bei der die Dämpfungsplatte (76) um wenigstens eine Achse symmetrisch ist.

3. Spannvorrichtung (10) nach Anspruch 1, bei der die Dämpfungsplatte (76) eine äußere Reibfläche (78) aufweist.

4. Spannvorrichtung (10) nach Anspruch 1, bei der die Dämpfungsplatte (76) einen angebrachten Belag (84) aufweist, der die äußere Reibfläche (78) bildet.

5. Spannvorrichtung (10) nach Anspruch 1, bei der die Feder (70) eine Torsionsfeder ist.

6. Spannvorrichtung (10) nach Anspruch 1, bei der die Dämpfungsplatte (76) kreisförmig ist.

7. Spannvorrichtung (10) nach Anspruch 1, bei der die Dämpfungsplatte (76) halbkreisförmig ist.

8. Spannvorrichtung (10) nach Anspruch 1, bei der die Dämpfungsplatte (76) eine innere Reibfläche aufweist.

9. Spannvorrichtung (10) nach Anspruch 8, bei der die Dämpfungsplatte (76) einen angebrachten Belag (84) aufweist, der die innere Reibfläche (78) bildet.

10. Spannvorrichtung (10) nach Anspruch 1, bei der die Dämpfungsplatte (76) einen Kanal (86) mit einer Plattenbasis (88), einer Innenwand (90) und einer Außenwand (92) aufweist.

11. Spannvorrichtung (10) nach Anspruch 10, bei der die Plattenbasis (88) eine Unterseite zum gleitenden Zusammengreifen mit der Spannvorrichtung (10) aufweist.

12. Spannvorrichtung (10) nach Anspruch 11, bei der die Unterseite Reibpads (93) aufweist.

13. Spannvorrichtung (10) nach Anspruch 10, bei der die Plattenbasis (88) eine Oberseite zum Zusammengreifen mit der Feder (70) aufweist.

14. Spannvorrichtung (10) nach Anspruch 7, bei der die Dämpfungsplatte (76) ein Drehgelenk (100) für die Relativbewegung der Dämpfungsplatte (76) aufweist.

15. Spannvorrichtung (10) nach Anspruch 14, bei der die Dämpfungsplatte (76) einen Kanal (86) mit einer Plattenbasis (88), einer Innenwand (90) und einer Außenwand (92) aufweist.

16. Spannvorrichtung (10) nach Anspruch 15, bei der die Außenwand (92) ein Auslenkband (102) zum radialen Zusammengreifen mit der Spannvorrichtung (10) aufweist.

## Revendications

1. Tensionneur (10) pour tendre une courroie de transmission (16), comprenant un mécanisme d'amortissement (34) qui comprend :
un ressort (70) ayant des première (72) et seconde (74) extrémités, le ressort (70) étant capable d'exercer un couple élastique ;
une plaque d'amortissement (76) ayant une surface de frottement (78) et au moins une surface en rampe (77) ;
**caractérisé en ce que** :
la surface en rampe (77) met en prise une surface de pivot (79) ; et
la plaque d'amortissement (76) inclut des premier (80) et second (82) points de contact de ressort pour connecter fonctionnellement la première extrémité (72) du ressort (70), avec pour effet que le couple élastique appliqué à la plaque d'amortissement (76) en combinaison avec une force de réaction au niveau de la surface de pivot (79) génère une force normale.

2. Tensionneur (10) selon la revendication 1, dans lequel la plaque d'amortissement (76) est symétrique autour d'au moins un axe.

3. Tensionneur (10) selon la revendication 1, dans lequel la plaque d'amortissement (76) inclut une surface de frottement extérieure (78).

4. Tensionneur (10) selon la revendication 1, dans lequel la plaque d'amortissement (76) inclut un revêtement attaché (84) qui définit la surface de frottement extérieure (78).

5. Tensionneur (10) selon la revendication 1, dans lequel le ressort (70) est un ressort de torsion.

6. Tensionneur (10) selon la revendication 1, dans lequel la plaque d'amortissement (76) est circulaire.

7. Tensionneur (10) selon la revendication 1, dans lequel la plaque d'amortissement (76) est semi-circulaire.

8. Tensionneur (10) selon la revendication 1, dans lequel la plaque d'amortissement (76) inclut une surface de frottement intérieure.

9. Tensionneur (10) selon la revendication 8, dans lequel la plaque d'amortissement (76) inclut un revêtement attaché (84) qui définit la surface de frottement intérieure (78).

10. Tensionneur (10) selon la revendication 1, dans lequel la plaque d'amortissement (76) inclut un canal (86) ayant une base de plaque (88), une paroi interne (90) et une paroi externe (92).

11. Tensionneur (10) selon la revendication 10, dans lequel la base de plaque (88) inclut une surface inférieure pour mise en prise coulissante avec le tensionneur (10).

12. Tensionneur (10) selon la revendication 11, dans lequel la surface inférieure inclut des rembourrages de frottement (93).

13. Tensionneur (10) selon la revendication 10, dans lequel la base de plaque (88) inclut une surface supérieure pour mise en prise avec le ressort (70).

14. Tensionneur (10) selon la revendication 7, dans lequel la plaque d'amortissement (76) inclut un joint pivotant (100) pour permettre un mouvement relatif de la plaque d'amortissement (76).

15. Tensionneur (10) selon la revendication 14, dans lequel la plaque d'amortissement (76) inclut un canal (86) ayant une base de plaque (88), une paroi interne (90) et une paroi externe (92).

16. Tensionneur (10) selon la revendication 15, dans lequel la paroi externe (92) inclut une bande de déflexion (102) pour permettre la mise en prise radiale avec le tensionneur (10).
